# FASCICULE DE BREVET EUROPEEN

(11) **EP 0 611 222 B1**
(45) Date de publication et mention de la délivrance du brevet: **06.05.1998**
(21) Numéro de dépôt: 94410007.2
(22) Date de dépôt: 08.02.1994
(51) Int. Cl.: G01D 5/24, G01P 15/125, G01L 9/00

(54) **Procédé de découpe d'un microcapteur capacitif**
Schnittverfahren für kapazitiven Microsensor
Cutting process for a capacitive microsensor

(30) Priorité: 10.02.1993 FR 9301741
(43) Date de publication de la demande: 17.08.1994
(73) Titulaire: SEXTANT AVIONIQUE S.A., 92366 Meudon la Forêt Cédex (FR)
(72) Inventeur: Legoux, Christophe, F-26000 Valence (FR)
(74) Mandataire: de Beaumont, Michel

(56) Documents cités:
- EP-A- 0 369 352
- US-A- 4 930 043

## Description

La présente invention concerne le domaine des micro-capteurs capacitifs en silicium. De tels micro-capteurs peuvent par exemple constituer des capteurs de pression, des capteurs d'accélération...

Ces dernières années, se sont développés de nouveaux types de micro-capteurs en silicium, tirant partie des techniques de gravure du silicium développées dans le cadre de la fabrication des composants électroniques à semiconducteurs. Au début, de tels micro-capteurs étaient constitués de l'assemblage de plaquettes de silicium convenablement gravées et de lames minces de verre servant de boîtier étanche ou de plaques de séparation isolantes entre des plaquettes de silicium, ces lames de verre portant éventuellement divers motifs d'électrodes métalliques.

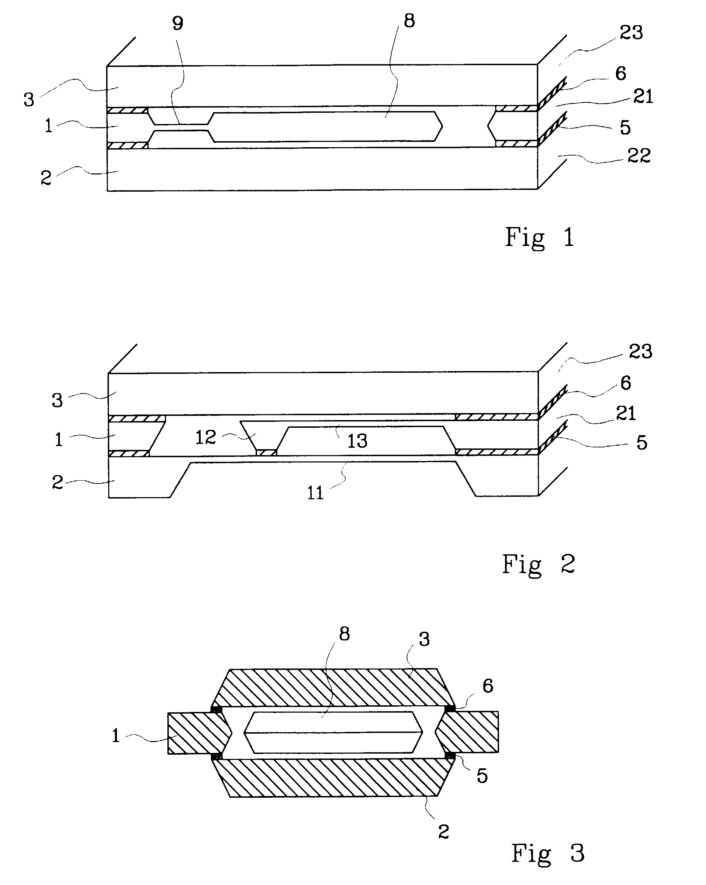

On tend actuellement à développer des micro-capteurs entièrement en silicium, sans plaque de verre jouant un rôle actif. Des exemples très schématiques de tels capteurs sont illustrés en figures 1 et 2.

Le capteur de la figure 1 est un capteur d'accélération et le capteur de la figure 2 un capteur de pression. Chacun de ces capteurs comprend une plaquette de silicium centrale 1 prise en sandwich entre des plaquettes de silicium externes 2 et 3. L'isolement entre les plaquettes est assuré par une première bande isolante 5, généralement une couche d'oxyde de silicium, entre les plaquettes 1 et 2 et une deuxième bande isolante 6 entre les plaquettes 1 et 3. Ces bandes isolantes prennent la forme d'un cadre disposé entre des plaquettes adjacentes, le long des bords de celles-ci. Des bandes d'oxyde peuvent être obtenues par croissance ou dépôt à partir de l'une des plaquettes adj adjacentes, puis gravure. Une fois les trois plaquettes appliquées les unes contre les autres, une soudure est réalisée par un recuit à une température de 900 à 1100°C. Pour cela, la pratique montre qu'il convient que les surfaces de silicium et d'oxyde de silicium en regard aient de très faibles rugosités, par exemple inférieures à 0,5 nm. Les plaquettes de silicium extrêmes 2 et 3 définissent entre elles et avec la partie de cadre de la plaquette de silicium 1 une région dans laquelle est contenue une atmosphère contrôlée, par exemple une atmosphère à très faible pression, appelée vide.

La description précédente s'applique communément aux micro-capteurs des figures 1 et 2.

Dans le cas de la figure 1, qui représente schématiquement une vue en coupe d'un accéléromètre, la plaquette de silicium centrale 1 est gravée avant assemblage pour comprendre un cadre et une plaque centrale ou masselotte 8 fixée au cadre par des barres minces de suspension 9. Une seule barre apparait dans la vue en coupe schématique de la figure 1. De façon classique, on utilisera des systèmes de suspension à deux ou quatre barres. Les plaquettes externes 2 et 3 délimitent avec le cadre formé à la périphérie de la plaquette centrale un espace vide. On détecte les variations de capacité entre la face supérieure de la masselotte et la plaquette de silicium 3 et éventuellement également entre la face inférieure de la masselotte et la plaquette inférieure 2. Quand le dispositif est soumis à une accélération, la masselotte 8 se déplace par rapport à l'ensemble du dispositif et les capacités susmentionnées varient. Il est également généralement prévu un asservissement électrostatique pour maintenir en place la masselotte par application d'un champ électrique continu et c'est alors le signal d'erreur qui donne une indication de la variation de capacité.

Des structures du type de celle de la figure 1 sont décrites plus en détail par exemple dans la demande de brevet EP-A-369 352.

La figure 2 représente très schématiquement une structure constituant un capteur de pression. La plaquette inférieure 2 est gravée pour y former une membrane mince 11. La plaquette 1 est gravée pour former un plot 12 appuyé sur cette membrane. Une lamelle de silicium 13 s'étend entre ce plot et le cadre de la plaquette 1. A nouveau, la plaquette supérieure, la plaquette inférieure et le cadre de la plaquette centrale délimitent un espace vide. Des variations de pression externe déforment la membrane 11 et entraînent une déformation de la tension de la lamelle 13. Cette variation de tension entraîne une variation de la fréquence de résonance du résonateur capacitif conistitué par la lamelle 13 et la surface en regard de la plaquette 3. De préférence, la face interne de la plaquette 3 est gravée pour former une bande en saillie en face de la lamelle 13.

Dans le cas de la figure 1, des électrodes 21, 22 et 23 doivent être respectivement solidaires des plaquettes 1, 2 et 3. Dans le cas de la figure 2, seules les électrodes 21 et 23 seront nécessaires.

Ces structures de l'art antérieur, qu'elles utilisent directement une mesure de capacité ou une mesure de fréquence de résonance présentent l'inconvénient que ces mesures sont fortement affectées par la présence de capacités parasites. Ces capacités parasites correspondent essentiellement aux capacités entre le cadre formé dans la plaquette 1 et les parties en regard de la plaquette supérieure et/ou inférieure, capacités dont le diélectrique est constitué par les couches d'isolant (oxyde de silicium) 5 et 6.

Non seulement ces capacités parasites ont une valeur élevée mais en plus cette valeur est variable. Cette variation pouvant notamment résulter d'un dépôt de matière polluante ou d'humidité sur les faces latérales du dispositif dans les zones d'affleurement des couches isolantes 5 et 6. En outre, en pratique, la fabrication d'un micro-capteur tel que celui de la figure 1 ou 2 résulte d'un procédé collectif, chaque plaquette faisant initialement partie d'une tranche de silicium de plus grande dimension, la séparation en capteurs individuels se faisant après les opérations finales d'assemblage et éventuellement de formation de contact. Généralement, oette séparation est effectuée par sciage et, lors du sciage, des copeaux de silicium peuvent être entraînées vers les zones d'affleurement susmentionnées des couches isolantes 5 et 6, ce qui augmente la valeur des capacités parasites, la rend différente d'un composant à l'autre, et peut même au pire court-circuiter deux plaquettes de silicium.

On connaît aussi des capteurs, tels que décrits par exemple dans US-A-4 930 043, dans lesquels au moins chacune des plaquettes externes est découpée avant assemblage mais alors le procédé de fabrication est plus délicat et l'assemblage moins précis.

Un objet de la présente invention est de prévoir un procédé collectif de fabrication de micro-capteurs permettant d'éviter l'apparition de tels court-circuits totaux ou partiels susceptibles d'affecter les capacités associées aux faces latérales des micro-capteurs.

Un autre objet de la présente invention est de réduire la valeur des capacités parasites.

Un autre objet de la présente invention est d'obtenir un micro-capteur à capacité parasite constante.

Un autre objet de la présente invention est d'obtenir un micro-capteur dans lequel les capacités parasites ne varient pas en fonction de l'environnement dans lequel est placé le micro-capteur.

Pour atteindre ces objets, la présente invention prévoit un procédé de fabrication d'un micro-capteur capacitif, consistant à assembler trois plaquettes de silicium séparées entre elles, au moins au niveau de leur pourtour, par une bande isolante, chacune de ces plaquettes faisant initialement partie d'une tranche de silicium, des dispositifs individuels étant formés par découpe de l'assemblage de tranches. La découpe comprend les étapes consistant à découper tout le contour des plaquettes externes par gravure chimique et à découper la plaquette centrale selon un contour en débordement par rapport aux plaquettes externes.

Selon un mode de réalisation de la présente invention, les plaquettes de silicium externes sont orientées dans des plans (1,0,0).

Selon un mode de réalisation de la présente invention, la bande isolante est en oxyde de silicium.

Selon un mode de réalisation de la présente invention, les faces supérieure et inférieure de la partie en débordement sont recouvertes d'une couche d'oxyde de silicium.

Selon un mode de réalisation de la présente invention, la périphérie de chacune des plaquettes externes et une partie au moins des surfaces supérieure et inférieure sont recouvertes d'un matériau de protection tel qu'une résine.

Ces objets, caractéristiques et avantages ainsi que d'autres de la présente invention seront exposés en détail dans la description suivante de modes de réalisation particuliers faite en relation avec les figures jointes parmi lesquelles :
les figures 1 et 2 décrites précédemment sont des vues en coupe schématique de micro-capteurs capacitifs, respectivement, d'accélération et de pression selon l'art antérieur ;
la figure 3 représente une vue en coupe schématique d'un micro-capteur capacitif obtenu par le procédé selon la présente invention ;
les figures 4A à 4C représentent des vues en coupe de trois tranches de silicium destinées à être assemblées puis découpées pour former des capteurs selon la présente invention ;
les figures 5A, 5B et 5C représentent des étapes successives d'assemblage et de découpe de capteurs selon le procédé de la présente invention ;
la figure 6 est une vue de dessus correspondant à la vue en coupe de la figure 5B ;
la figure 7 est une vue en perspective d'un capteur obtenu selon la présente invention ; et
la figure 8 est une vue en coupe illustrant un détail d'un capteur obtenu selon la présente invention.

Dans les diverses figures,- les épaisseurs relatives des diverses couches et les dimensions latérales des divers éléments ne sont pas à l'échelle mais ont été tracées arbitrairement pour faciliter la lisibilité des figures et en simplifier le dessin. Les dimensions usuelles seront déterminées par l'homme de métier selon le type de capteur qu'il veut réaliser. A titre d'exemple, les épaisseurs des plaquettes de silicium seront de l'ordre de 0,3 à 0,5 mm tandis que les épaisseurs des couches d'isolant seront de l'ordre de 2 à 4 micromètres. Les dimensions latérales de chaque composant pourront être de l'ordre de 3 à 6 mm.

La figure 3 représente un capteur du type accéléromètre obtenu par le procédé selon la présente invention. De mêmes éléments que ceux de la figure 1 sont désignés par de mêmes références. Le capteur de la figure 3 se distingue de celui de la figure 1 par son mode de découpe. Le capteur de la figure 1 présente des flancs plans résultant du sciage d'un ensemble de trois tranches de silicium à partir desquelles sont formées les capteurs élémentaires. Dans le capteur de la figure 3, la plaquette de silicium centrale 1 fait saillie latéralement par rapport au contour des plaquettes externes 2 et 3.

La découpe du capteur de la figure 3 résulte de deux étapes successives. Dans une première étape, les tranches de silicium externes 2 et 3 sont découpées par gravure photolithographique. Selon un mode de réalisation préféré de la présente invention, les plaquettes sont orientées dans des plans (1,0,0) et la gravure expose des flancs situés dans des plans (1,1,1). De façon connue, ce résultat est obtenu en utilisant des produits d'attaque tels que de la potasse et l'angle entre les plans (1,1,1) et les plans (1,0,0) est sensiblement égal à 57°. Après cette gravure chimique, les plaquettes centrales 1 sont séparées des plaquettes adjacentes par tout moyen connu, par exemple par sciage.

Ce procédé fournit, par rapport au procédé antérieur de sciage de l'ensemble des trois tranches, de nombreux avantages.

Un premier avantage réside dans la précision de délimitation du contour des plaquettes 2 et 3, précision qui est beaucoup plus élevée par des opérations de photolithogravure que par des opérations de sciage. Ainsi, le contour externe des bandes d'oxyde 5 et 6 isolant la plaquette centrale des plaquettes externes est fixé avec précision. Le contour interne de ces bandes étant également fixé avec précision par des opérations de photolithogravure, on peut choisir pour la largeur de ces bandes des valeurs faibles, par exemple de 50 à 200 micromètres, ce qui est inférieur aux dimensions que l'on pourrait obtenir par sciage.

Un deuxième avantage lié au fait qu'il n'est pas effectué de sciage au niveau de l'affleurement externe des bandes isolantes 5 et 6 est qu'il n'y a pas de risque de mise en court-circuit totale ou partielle par des copeaux de silicium.

Un troisième avantage de cette structure est qu'elle se prête bien au dépôt d'un produit de protection à l'extérieur des bandes isolantes 5 et 6, par exemple un dépôt de résine. On évite ainsi les variations de capacité liées à l'environnement.

Un quatrième avantage est, comme on le notera ci-après, qu'il est simple de prendre un contact sur la plaquette 1.

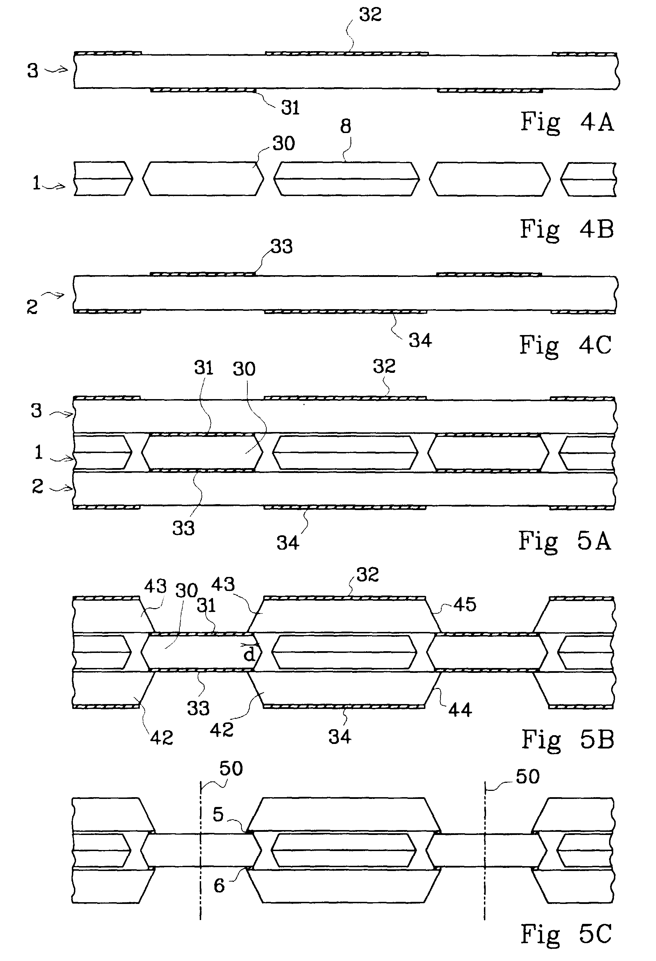

Les figures 4A, 4B et 4C représentent chacune de trois tranches de silicium 3, 1, 2 destinées à être superposées pour former un capteur. Dans la tranche centrale 1 sont découpées des masselottes 8, rattachées par des bras de suspension (non représentés) à des régions de silicium 30 formant cadres qui les entourent. La tranche 1 peut être gravée de diverses façons choisies, non représentées, pour former de façon choisie un dispositif approprié. La tranche supérieure comprend, en regard des régions de cadre 30 une couche isolante 31, couramment une couche d'oxyde, destinée à fixer l'espacement entre la tranche supérieure et la masselotte et à isoler les tranches 1 et 3. En outre, cette tranche supérieure porte sur sa face supérieure des régions de masquage 32, par exemple également en oxyde, dont chacune correspond sensiblement, en projection, à chacune des masselottes 8.

La tranche inférieure de la figure 4C comprend des régions d'espacement et d'isolement 33 symétriques des régions 31 et des régions de masquage 34 symétriques des régions 32.

La figure 5A représente les trois tranches des figures 4A, 4B et 4C assemblées. Cet assemblage peut être suivi d'un recuit pour assurer une soudure entre les couches isolantes 31 et 33, par exemple des couches d'oxyde, et les faces en regard des régions de cadre en silicium 30 de la tranche centrale.

La figure 5B représente la structure après réalisation d'une étape de gravure pour découper les tranches inférieure et supérieure jusqu'à la tranche centrale, sensiblement au-dessus du cadre 30. Il demeure ainsi de chacune des tranches inférieure et supérieure des îlots ou plaquettes 42 et 43 qui viennent appuyer sur les flancs du cadre 30. Les flancs 44 et 45 de ces îlots, sont de façon connue inclinés à sensiblement 57° par rapport à l'horizontale en raison de l'orientation (1,0,0) des tranches de silicium externes. Un avantage de ce procédé de photolithogravure est qu'il est extrêmement précis et qu'il permet donc de définir avec précision la longueur d des couches d'oxyde 31 et 33 qui reste recouverte par les îlots 42 et 43. En effet, on comprendra que la dimension et la position des couches de masquage 32 et 34 auront été fixées pour déterminer cette longueur d.

La figure 5C représente une étape ultérieure éventuelle du procédé selon la présente invention. Cette étape consiste à éliminer les couches d'oxyde 31 à 34 par attaque chimique pour laisser en place seulement les bandes isolantes 5 et 6 telles que celles illustrées en figure 3. Dans cette figure, les traits en pointillés verticaux 50 désignent les régions où pourront être effectués des traits de scie pour séparer les tranches en composants individuels.

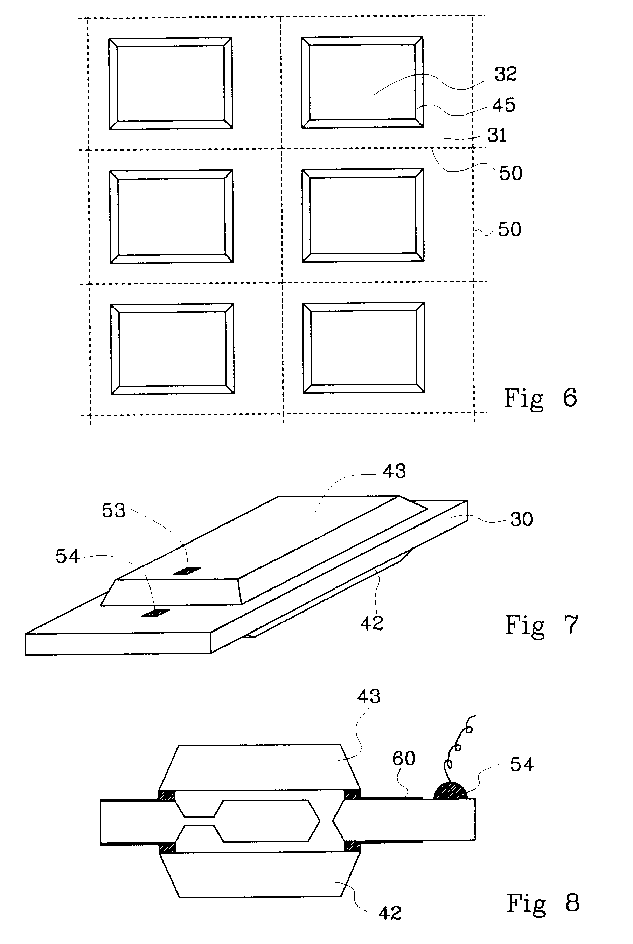

Il faut noter que l'étape d'élimination simultanée des couches d'oxyde 31 à 34 ne constitue qu'un exemple de réalisation de la présente invention. De nombreuses variantes sont possibles. D'une part, les matériaux de masquage 32 et 34 peuvent être différents des matériaux d'espacement 31 et 33 de sorte que leur gravure est sélective. D'autre part, même si ces matériaux sont de même nature, par exemple un oxyde de silicium, ils peuvent être d'épaisseurs différentes. De plus, comme on le verra ci-après, l'épaisseur des couches 31 et 33 peut être inhomogène, en prévoyant par exemple une partie centrale amincie pour que par suite d'une gravure, et comme on le décrira en relation avec la figure 8, il demeure en place une couche de protection en dehors des emplacements où l'on souhaite effectuer des contacts.

La figure 6 représente une vue de dessus correspondant à la vue en coupe de la figure 5B. Dans cette figure, de mêmes éléments sont désignés par des mêmes références numériques. On notera que, verticalement, les traits de scie 50 ne sont pas prévus exactement au milieu de deux composants de façon à prévoir une plage de prise de contact plus importante d'un côté de chaque composant.

La figure 7 est une vue en perspective d'un composant obtenu selon la présente invention. Les carrés 53 et 54 désignent des zones de prise de contact.

La figure 8 est une vue en coupe illustrant une variante de la présente invention. Cette vue est similaire à la figure 3. Mais on a représenté, comme cela a été évoqué précédemment, des régions d'oxyde de protection 60 qui se prolongent sur la partie en saillie de la plaquette centrale, au-delà du périmètre des îlots 43 et 42, sauf sur les régions de contact 54, ce qui améliore la qualité de l'isolement. On aurait aussi pu, avant découpe, remplir les zones intermédiaires entre les îlots 43, d'une part, et entre les îlots 42 d'autre part d'une couche de protection telle qu'une résine isolante dans laquelle des ouvertures sont ménagées pour assurer la prise de contact.

Bien que la présente invention ait été décrite en relation avec une structure particulière de micro-capteur comprenant un sandwich de trois tranches de silicium séparées latéralement par une couche d'oxyde, la présente invention s'applique à d'autres types de micro-capteur dans lesquels la couche isolante serait autre qu'une couche d'oxyde, par exemple un sandwich d'une couche isolante, d'une couche conductrice et d'une couche isolante.

La présente invention est susceptible de nombreuses variantes et modifications qui apparaîtront à l'homme de l'art. Notamment, on a décrit un mode de réalisation de l'invention en relation avec un accéléromètre très schématique. De nombreuses autres structures d'accéléromètre sont connues dans la technique et l'on soulignera à nouveau que la présente invention s'applique également à des structures du type capteur de pression telle que celle illustrée en figure 2.

## Revendications

1. Procédé de fabrication d'un micro-capteur capacitif, consistant à assembler trois plaquettes de silicium (1, 2, 3) séparées entre elles, au moins au niveau de leur pourtour, par une bande isolante (31, 33), chacune de ces plaquettes faisant initialement partie d'une tranche de silicium, des dispositifs individuels étant formés par découpe de l'assemblage de tranches, caractérisé en ce que ladite découpe comprend les étapes suivantes :
- découper tout le contour des plaquettes externes (2, 3) par gravure chimique ; et
- découper la plaquette centrale (1) selon un contour en débordement par rapport aux plaquettes externes.

2. Procédé de fabrication d'un micro-capteur capacitif selon la revendication 1, caractérisé en ce que les plaquettes de silicium externes sont orientées dans des plans (1,0,0).

3. Procédé de fabrication d'un micro-capteur capacitif selon la revendication 1, caractérisé en ce que ladite bande isolante (31, 33) est en oxyde de silicium.

4. Procédé de fabrication d'un micro-capteur capacitif selon la revendication 1, caractérisé en ce que les faces supérieure et inférieure de la partie en débordement sont recouvertes d'une couche (60) d'oxyde de silicium.

5. Procédé de fabrication d'un micro-capteur capacitif selon la revendication 1, caractérisé en ce que la périphérie de chacune des plaquettes externes (1, 3) et une partie au moins des surfaces supérieure et inférieure sont recouvertes d'un matériau de protection tel qu'une résine.

## Patentansprüche

1. Verfahren zum Herstellen eines kapazitiven Mikrosensors, bei dem drei Siliziumplatten (1, 2, 3) zusammengesetzt werden, die wenigstens an ihrem Umfang durch einen Isolationsstreifen (31, 33) getrennt sind, wobei jede der Platten ursprünglich ein Teil einer Silizium-Wafer ist und individuelle Einheiten durch Schneiden der Wafer-Anordnung gebildet werden, dadurch **gekennzeichnet,** daß das Schneiden die folgenden Schritte umfaßt:
- Schneiden der gesamten Kontur der äußeren Platten (2, 3) durch chemisches Ätzen; und
- Schneiden der zentralen Platte (1) entsprechend einer Kontur, die über die äußeren Platten vorsteht.

2. Verfahren zum Herstellen eines kapazitiven Mikrosensors nach Anspruch 1, dadurch **gekennzeichnet**, daß die äußeren Siliziumplatten in Ebenen (1, 0, 0) ausgerichtet sind.

3. Verfahren zum Herstellen eines kapazitiven Mikrosensors nach Anspruch 1, dadurch **gekennzeichnet**, daß der Isolationsstreifen (31, 33) aus Siliziumoxid besteht.

4. Verfahren zum Herstellen eines kapazitiven Mikrosensors nach Anspruch 1, dadurch **gekennzeichnet,** daß die obere und die untere Oberfläche des vorstehenden Abschnittes mit einer Siliziumoxid-Schicht (60) bedeckt ist.

5. Verfahren zum Herstellen eines kapazitiven Mikrosensors nach Anspruch 1, dadurch **gekennzeichnet,** daß der Randbereich einer jeden äußeren Platte (1, 3) und ein Abschnitt von wenigstens der oberen und der unteren Oberfläche mit einem schützenden Material, wie zum Beispiel Harz, bedeckt sind.

## Claims

1. A method of manufacturing of a capacitive microsensor, consisting of assembling three silicon plates (1, 2, 3) separated, at least at their circumference, by an isolating stripe (31, 33), each of the plates being initially a part of a silicon wafer, individual devices being formed by cutting of the wafer assembly, characterized in that the cutting includes the steps of:
- cutting the entire contour of the external plates (2, 3) by chemical etching; and
- cutting the central plate (1) according to a contour protruding with respect to the external plates.

2. The method of manufacturing of a capacitive microsensor of claim 1, characterized in that the external silicon plates are oriented in planes (1, 0, 0).

3. The method of manufacturing of a capacitive microsensor of claim 1, characterized in that the isolating stripe (31, 33) is made of silicon oxide.

4. The method of manufacturing of a capacitive microsensor of claim 1, characterized in that the upper and lower surfaces of the protruding portion are covered with a silicon oxide layer (60).

5. The method of manufacturing of a capacitive microsensor of claim 1, characterized in that the periphery of each of the external plates (1, 3) and one portion at least of the upper and lower surfaces are covered with a protective material such as a resin.
